# EUROPEAN PATENT SPECIFICATION

(11) **EP 2 927 603 B1**
(45) Date of publication and mention of the grant of the patent: **18.12.2019**
(21) Application number: 15151627.5
(22) Date of filing: 19.01.2015
(51) Int. Cl.: D06F 39/14, E05C 3/12, E05C 3/14, E05D 3/02, F24C 15/02, E05F 1/12, A47L 15/42

(54) **Domestic appliance comprising a door opening system**
Haushaltsgerät umfassend ein Türöffnungssystem
Appareil électroménager comprenant un système d'ouverture de porte

(30) Priority: 03.04.2014 EP 14163413
(43) Date of publication of application: 07.10.2015
(60) Divisional application: 19168849.8
(73) Proprietor: Electrolux Appliances Aktiebolag, 105 45 Stockholm (SE)
(72) Inventor: Ivanovic, Branko, 91541 Rothenburg ob der Tauber (DE); Hildner, Dietmar, 91541 Rothenburg ob der Tauber (DE); Horstmann, Reiner, 91541 Rothenburg ob der Tauber (DE)
(74) Representative: Electrolux Group Patents

(56) References cited:
- EP-A2- 1 961 901
- EP-A2- 2 527 577
- EP-B1- 0 632 180

## Description

The present invention relates to a domestic appliance according to the preamble of claim 1. For example, said domestic appliance may be a cooking oven, a dishwasher or a washing machine.

In known domestic appliances, the door is hinged and pivoting around an either vertical or horizontal axis. If the door is pivoting around the vertical axis, then the domestic appliance does not contain any balancing mechanism against the force of gravity. However, if the door is pivoting around the horizontal axis, in particular at the lower end of said door, then usually the domestic appliance comprises the balancing mechanism against the force of gravity.

At the door hinged around the horizontal axis at the lower end of said door, a door hinge typically provides a closing force that compresses a door gasket in a closed state of the door. In contrast, at the door hinged around the vertical axis, a door latch typically compresses the door gasket in the closed state of the door.

Further, some known domestic appliances include safety locking and unlocking devices for doors. For example, safety locking devices for doors of pyrolytic ovens, programmable child-proof locks for oven doors and safety locks for washing machines comprise hook mechanisms for locking the door, when said door should not be opened by a user or child in a potentially harmful period of an operation cycle. The safety locking and unlocking devices are usually controlled automatically to disengage and set free the door, when a save situation for opening the door occurs.

Moreover, some domestic appliances, such as tumble dryers, comprise a hook mechanism for engaging and blocking the door, wherein the hook may be disengaged from the door by a mechanical actuator pressed by the user. Typically, the doors of such domestic appliances do not contain any door handle.

A usual pyrolytic door lock system keeps the door closed during the pyrolytic cleaning cycle. The lock mechanism comprises an electric motor, a solenoid or a wax motor for moving a mechanical slider. Said mechanical slider can push a hook into a position, in which said hook engages with the door. The hook is disengaged from the door, when the slider is moved back by the electric motor, solenoid or wax motor, respectively, and the hook is pushed back into a passive position. However, the closing and opening of the door lock system by the above motors requires a relative long time, e.g. about two to five seconds.

EP 0 632 180 B1 discloses a door opening system for a domestic appliance. Said door opening system comprises a pair of door hinges and a hook mechanism. The door is pivoting around a horizontal axis at the lower end of said door. Thus, the pair of door hinges is arranged at the lower end of said door. The substantial components of the door hinges are placed inside the door. In the closed state of the door said components are arrange vertically inside the door. A small spring 30 pushes a cam 32 and a surface 8" with a vertical force. Thus, a rapid start of a door rotation from the closed state to the opened state is not possible. Further, the small spring 30 must be very strong. Moreover, the positions of the rotation axes 5 and 25 contribute that the fast start of the door rotation is not possible. The hook mechanism is arranged at an upper end of the door. The hook 21 is engageable with the door frame covered by the door. The opening of the door is caused by releasing the hook mechanism. In order to open the door the user has to push onto a button 21' in an upper front portion of said door. By pushing the button 21' the hook 21 is lifted from its locking position, so that the door may be opened by a roller 31 stressed by the small spring 30. However, at the same time the user pushes also the upper end portion of the door into its closed position, when pushing said button 21'. Thus, the actual opening of the door depends on a sufficient inertia of the hook 21 and/or on a sufficiently short operation of the button 21'. Moreover, the hook mechanism is manually operated, while an electric operation is not possible. Such electric operation would require wiring and power supply to the door. At last, the door hinges and the hook mechanism have complex structures.

It is an object of the present invention to provide a domestic appliance including at least one door, which allows a simple opening and closing of the door by low complexity.

The object of the present invention is achieved by the domestic appliance according to claim 1.

According to the present invention the hook element is disengageable from the recess by operating said hook element, and the stationary hinge part comprises a first spring element and a second spring element, wherein the first spring element and the second spring element are provided for generating horizontal forces in the mounted state of the door hinge at the domestic appliance, and wherein the first spring element is provided for keeping the door balanced within an outer opening angular range of said door, while the second spring element is provided for generating the opening force for the door within the inner opening angular range.

The main idea of the present invention is that the substantial components of the door hinge are placed in the support structure of the domestic appliance, but not in the door. The stationary hinge part is arranged horizontally and the first and second spring elements generate horizontal forces. The second spring element allows a horizontal opening force and a very low spring force, so that the start of the rotation of the door is very fast. Further, the arrangement of the door hinge allows that the pivoting axis is close to the domestic appliance and therefore the door may be rotated very fast.

A roller may be arranged at one end of the second spring element, which end comes into contact with the door or a part being in rigid connection to said door.

Preferably, the door opening system comprises a pair of door hinges having a common pivoting axis.

In particular, the hook mechanism and the hook element are arranged at a chassis of the domestic appliance, while the recess is formed in the door. Alternatively, the hook mechanism and the hook element may be arranged at the door, while the recess may be formed at the chassis of the domestic appliance.

Moreover, the hook mechanism may include a hook spring element pushing the hook element into that position, in which the recess is arranged, if the door is in the closed state. The hook spring element supports the snap-in mechanism of the hook element and the recess.

For example, in the partially opened state of the door an opening angle between the door and a front frame of the domestic appliance is between 10° and 30°, preferably about 20°.

Further, in the completely opened state of the door the opening angle between the door and the front frame of the domestic appliance may be between 80° and 90°, preferably about 85°.

Additionally, the door hinge may include a friction element between a stationary hinge part and a pivoting hinge part of said door hinge, wherein said friction element effects a stop of the door at a predetermined opening angle. When the hook element is released from the recess, then the door is automatically opened and stopped at the predetermined opening angle.

Preferably, the friction element is made of plastics.

Further, the first spring element may keep the door balanced against the force of gravity within the outer opening angular range of said door.

Alternatively or additionally, the first spring element may keep the door balanced against the force of the second spring element within the outer opening angular range of said door.

Preferably, the door is kept closed by the hook element engaged with the recess.

In particular, the door is kept closed only by the hook element engaged with the recess and without any force of the first spring element and second spring element.

For example, the door is pivoting around a horizontal axis.

Furthermore, the door may be pivoting around a vertical axis.

Novel and inventive features of the present invention are set forth in the appended claims.

The present invention will be described in further details with reference to the accompanied drawings, in which
- FIG 1: illustrates a schematic sectional side view of a domestic appliance including a door opening system according to a first embodiment of the present invention, wherein a door is in a closed state,
- FIG 2: illustrates a schematic sectional side view of the domestic appliance including the door opening system according to the first embodiment of the present invention, wherein the door is in a partially opened state,
- FIG 3: illustrates a schematic sectional side view of a door hinge of the door opening system according to the first embodiment of the present invention, wherein the door is in the partially opened state,
- FIG 4: illustrates a schematic sectional side view of the door hinge of the door opening system according to the first embodiment of the present invention, wherein the door is in the closed state,
- FIG 5: illustrates a schematic sectional side view of a hook mechanism of the door opening system according to a preferred embodiment of the present invention, wherein the door is in the closed state,
- FIG 6: illustrates a more detailed schematic sectional side view of the door hinge of the door opening system according to the first embodiment of the present invention, wherein the door is in the closed state,
- FIG 7: illustrates a more detailed schematic sectional side view of a door hinge of the door opening system according to the first embodiment of the present invention, wherein the door is in the partially opened state,
- FIG 8: illustrates a schematic sectional side view of the domestic appliance including the door opening system according to a second embodiment not covered by the claims, wherein the door is in a partially opened state, and
- FIG 9: illustrates a schematic sectional side view of a domestic appliance including a door opening system according to the second embodiment not covered by the claims,
wherein a door is in a closed state.

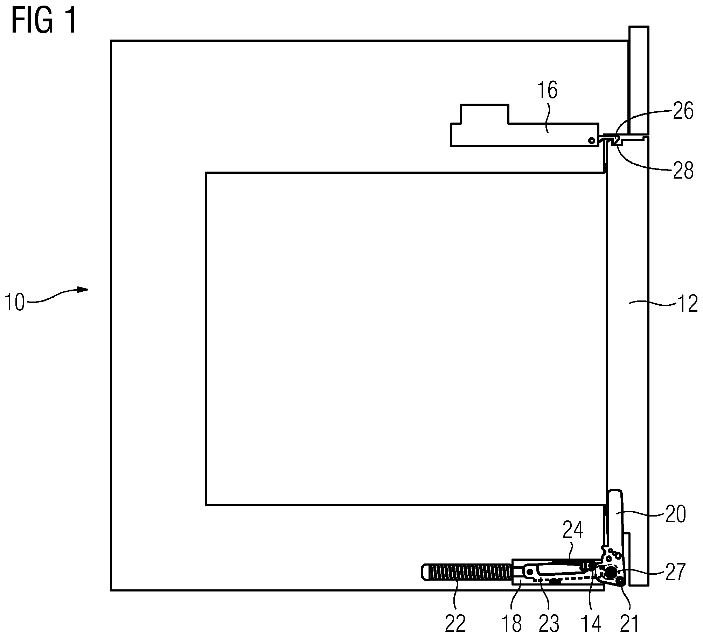

FIG 1 illustrates a schematic sectional side view of a domestic appliance 10 including a door opening system according to a preferred embodiment of the present invention, wherein a door 12 is in a closed state. In this embodiment, the door 12 is pivoting around a horizontal axis at a lower end of said door 12. For example, the domestic appliance 10 is a cooking oven and the door 12 is an oven door.

The door opening system of the domestic appliance 10 includes a door hinge 14 and a hook mechanism 16. The door hinge 14 forms the pivoting connection between the lower portions of the domestic appliance 10 and the door 12. The hook mechanism 16 forms a snap-in connection between the upper portions of the domestic appliance 10 and the door 12. The hook mechanism 16 is arranged in the domestic appliance 10.

The door hinge 14 includes a stationary hinge part 18 and a pivoting hinge part 20. The pivoting hinge part 20 forms a hinge arm. The pivoting hinge part 20 is rotatably connected to the stationary hinge part 18 at a first pivoting axis 21. Further, the pivoting hinge part 20 is rotatably connected to a first rod 23 at a second pivoting axis 27. The stationary hinge part 18 is arranged in and/or at the domestic appliance 10, while the pivoting hinge part 20 is arranged in and/or at the door 12. Further, the door hinge 14 includes a first spring element 22 and a second spring element 24. In this example, the first spring element 22 and the second spring element 24 are helix compression springs.

The hook mechanism 16 includes a hook element 26. The hook element 26 is pivoting at the hook mechanism 16. The hook element 26 is engageable with a recess 28 formed at and/or in the door 12. In this example, the recess 28 is formed in an upper circumferential side of the door 12. When the hook element 26 is engaged with the recess 28, then the door 12 is locked. The hook mechanism 16 can be triggered mechanically or electromechanically in order to disengage the hook element 26 from the recess 28 and to set free the door 12. Thus, the hook mechanism 16 may be controlled manually by the user or automatically. For example, the hook element 26 may be disengaged from the recess 28 by pressing a button. If the hook element 26 is visible, then the door 12 can be manually opened. Further, the hook element 26 may be disengaged from the recess 28 electromechanically, e.g. by an electric motor, a solenoid or a wax motor.

In particular, the hook mechanism 16 provides a safety lock of the door 12 in potentially dangerous situations. For example, during a pyrolytic cleaning cycle in an oven the door 12 must be locked as a precaution. Further, the door 12 of an oven may provide programmable child safety locks. Moreover, the door 12 of a washing machine may provide a safety lock. In general, the hook mechanism 16 of the inventive door opening system allows an opening of the door 12 of the domestic appliance 10 in any situations, in which the door 12 shall be opened, by operating a control element. The operation of said control element disengages the hook element 26 from the recess 28. The door 12 does not require a handle.

The door hinge 14 provides an unbalanced movement of the door 12 within an inner opening angular range of said door 12. In contrast, the door hinge 14 provides a balanced movement of the door 12 within an outer opening angular range of said door 12. The inner opening angular range of the door 12 extends from the closed state to a partially opened state of said door 12. The outer opening angular range of the door 12 extends from the partially opened state to the completely opened state of said door 12. The door hinge 14 may be provided for a door 12 hinged around a horizontal axis as well as a vertical axis.

Within the inner opening angular range the movement of the door 12 is unbalanced against the force of gravity and/or the force of the second spring element 24 pushes said door 12 open. In contrast, within the outer opening angular range the movement of the door 12 is at least substantially balanced to equilibrium against the force of gravity and/or against the force of the spring element pushing said door 12 open. Thus, the door hinge 14 allows a rapid movement of the door 12 within the inner opening angular range, after the door 12 has been released by the hook mechanism 16. Afterwards, within the outer opening angular range, the movement of the door 12 is delayed by the balancing force of the door hinge 14 by means of the first spring element 22.

The substantial components of the door hinge 14 are placed in the support structure of the domestic appliance 10, but not in the door 12. Thus, the stationary hinge part 18, the first spring element 22 and the second spring element 24 are arranged horizontally. The second spring element 24 allows a horizontal opening force and a very low spring force. The start of the rotation of the door 12 is very fast. Furthermore, such positioning of the door hinge 14 allows advantageous positions of the first pivoting axis 21 and second pivoting axis 27, which are close to the domestic appliance 10 and therefore the door 12 may be rotated very fast.

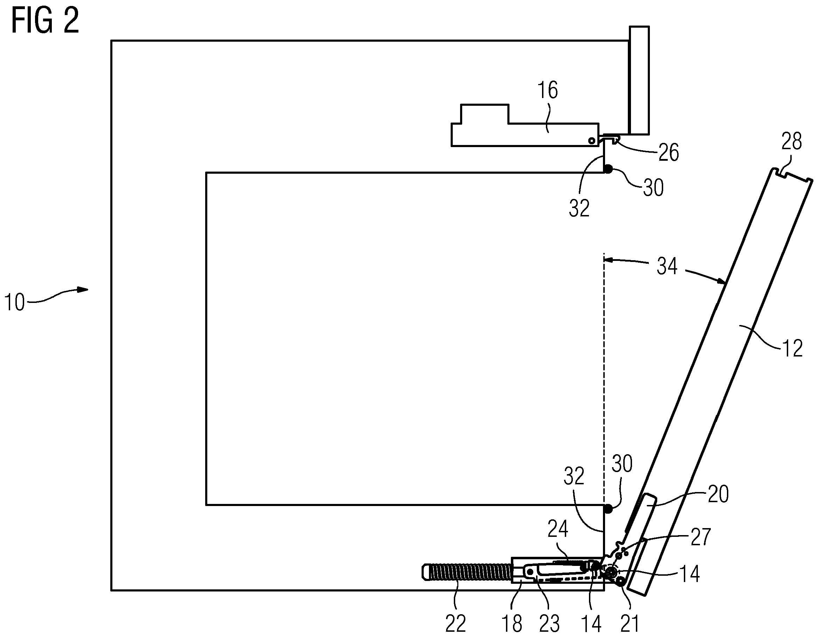

FIG 2 illustrates a schematic sectional side view of the domestic appliance 10 including the door opening system according to the preferred embodiment of the present invention, wherein the door 12 is in a partially opened state.

FIG 2 shows the same domestic appliance 10 as FIG 1, wherein the door 12 is inclined and partially opened. An opening angle 34 is formed between the inner side of the inclined door 12 and the plane of a front frame 32. In this example, the opening angle 34 is about 20°. In a completely opened state the opening angle of the door 12 is about 85°. A gasket 30 is attached at the front frame 32 of the domestic appliance 10. In the closed state of the door 12 the gasket is squeezed between the front frame 32 and said door 12 as shown in FIG 1.

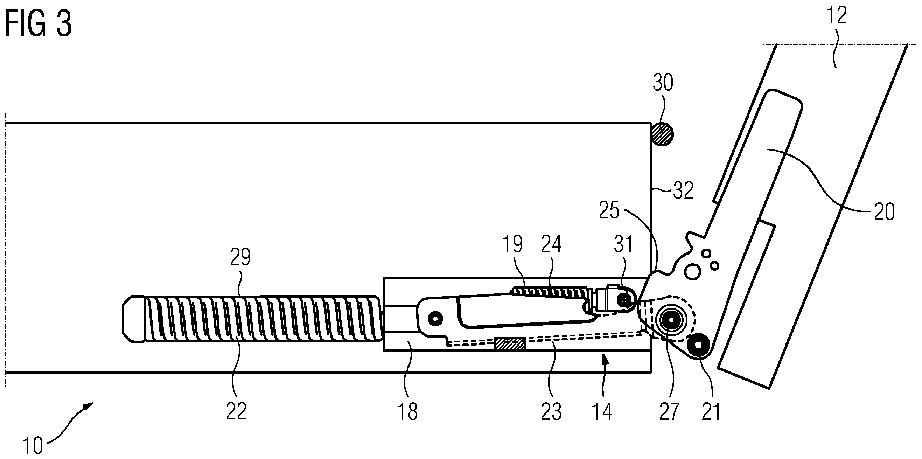

FIG 3 illustrates a schematic sectional side view of a door hinge 14 of the door opening system according to the preferred embodiment of the present invention, wherein the door 12 is in the partially opened state.

FIG 3 shows in detail the door hinge 14 including the stationary hinge part 18, the pivoting hinge part 20, the first spring element 22 and the second spring element 24. Further, FIG 3 shows in detail the gasket 30 attached at the front frame 32 of the domestic appliance 10.

The second spring element 24 provides an opening force for the door 12. Said opening force pushes the door 12 into the partially opened state. In order to open the door 12 by a low spring force, a hinge part profile being in contact to a hinge roller is designed in such a way that the second spring element 24 does not provide any closing force, when the door 12 is in the closed state. The door 12 is kept closed only by the hook mechanism 16.

The first spring element 22 mediates the partially opened state of the door 12. Further, the first spring element 22 keeps the door 12 balanced within the outer opening angular range of said door 12. Moreover, the first spring element 22 defines the opening angle of the door 12.

The pivoting hinge part 20 includes a cam 25. A slidable stem 31 with a roller at its end is connected to the second spring element 24. The second spring element 24 provides the opening force for the door 12. Said opening force pushes the door 12 into the partially opened state. The arrangement of the second spring element 24, the slidable stem 31 with the roller and the cam 25 allows the horizontal opening force and the very low spring force, wherein the start of the rotation of the door 12 is very fast.

Alternatively, the door hinge 14 may include a single spring element instead of the first spring element 22 and second spring element 24. In this case, said single spring element provides the opening force within the inner opening angular range and the balancing force within the outer opening angular range.

Furthermore, if the door 12 shall be stopped at an exact opening angle, for example the opening angle 34 of the partially open state, then a friction element may be arranged between the stationary hinge part 18 and the pivoting hinge part 20. For example, the friction element is made of plastics.

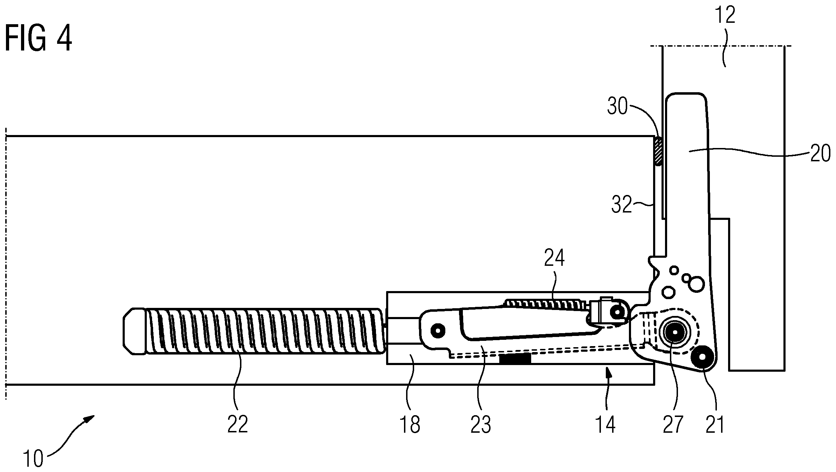

FIG 4 illustrates a schematic sectional side view of the door hinge 14 of the door opening system according to the preferred embodiment of the present invention, wherein the door 12 is in the closed state.

FIG 4 shows in detail the stationary hinge part 18, the pivoting hinge part 20, the first spring element 22 and the second spring element 24 of the door hinge 14. Moreover, FIG 4 shows the gasket 30 squeezed between the front frame 32 of the domestic appliance 10 and the door 12.

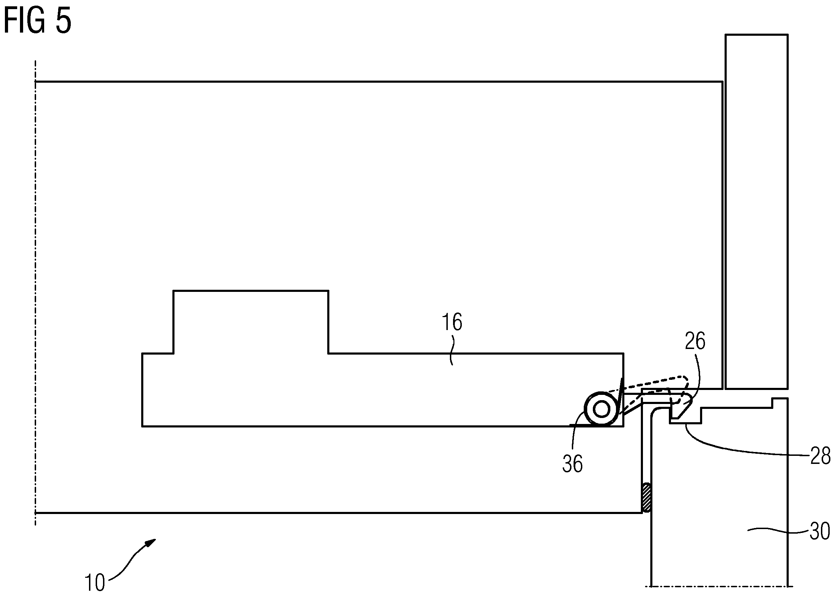

FIG 5 illustrates a schematic sectional side view of the hook mechanism 16 of the door opening system according to the preferred embodiment of the present invention, wherein the door 12 is in the closed state.

The hook mechanism 16 includes the hook element 26. Said hook element 26 is engaged or engageable with the recess 28 formed at the door 12. Further, the hook mechanism 16 includes a hook spring element 36. Said hook spring element 36 effects that the hook element 26 is pushed downwards in the example of FIG 5. In general, the hook spring element 36 effects that the hook element 26 is pushed into that position, in which the recess 28 of the door 12 is arranged, when the door 12 is in the closed state. Thus, the hook element 26 and the recess 28 form a snap-in mechanism. The door 12 can be closed manually by the user and is automatically locked by the hook element 26.

The hook mechanism 16 of the door opening system may be controlled manually by the user or automatically. For example, the hook element 26 is disengaged from the recess 28 by pressing a button. If the hook element 26 is visible, then the door 12 can be manually opened. Further, the hook element 26 may be disengaged from the recess 28 electromechanically, e.g. by an electric motor, a solenoid or a wax motor.

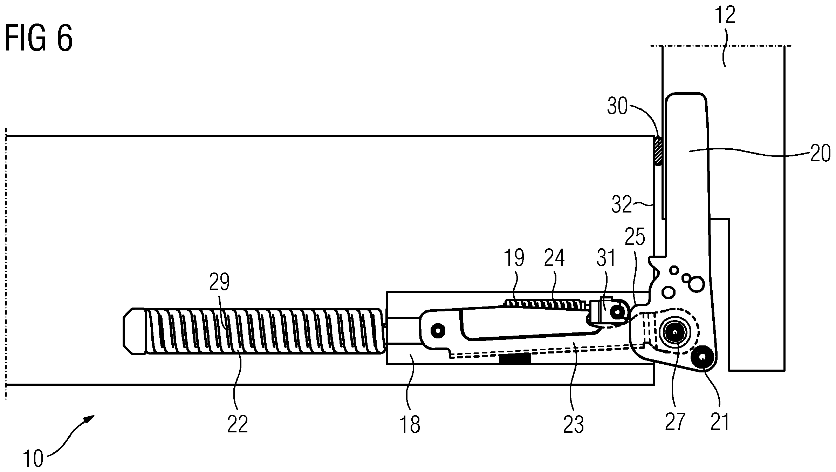

FIG 6 illustrates a more detailed schematic sectional side view of the door hinge 14 of the door opening system according to the first embodiment of the present invention, wherein the door 12 is in the closed state. FIG 3 shows the door hinge 14 including the stationary hinge part 18, the pivoting hinge part 20, the first spring element 22 and the second spring element 24.

Further, the pivoting hinge part 20 includes the cam 25. The slidable stem 31 with the roller at its end is connected to the second spring element 24. The second spring element 24 provides the opening force for the door 12. Said opening force pushes the door 12 into the partially opened state. The second spring element 24 pushes the slidable stem 31 with the roller at its end against the cam 25 of the pivoting hinge part 20. The second spring element 24 with the slidable stem 31 and the roller pushes the pivoting hinge part 20 with the cam 25 into the partially opened position, until the second spring element 24 being uncompressed. When the door 12 is closed, then the pivoting hinge part 20 with the cam 25 pre-compresses the second spring element 24. In FIG 6 the second spring element 24 is in the precompressed state. The pivoting hinge part 20 with the cam 25 is designed in such a way that the second spring element 24 does not provide any closing force, when the door 12 is in the closed state. The door 12 is kept closed only by the hook mechanism 16.

The first rod 23 is arranged within the stationary hinge part 18. A second rod 29 is serially connected to the first rod 23. The first rod 23 and the second rod 29 extend along a substantially horizontal direction. The first spring element 22 encloses the second rod 29. In FIG 6 the first spring element 22 is in a decompressed state.

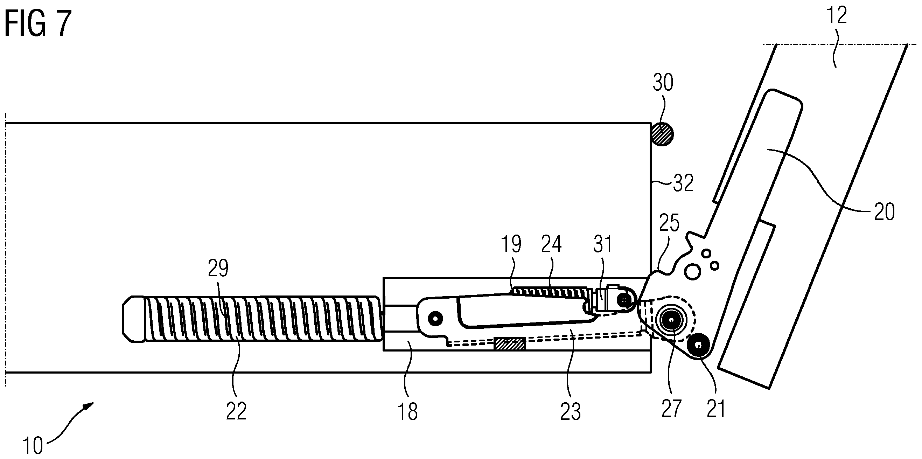

FIG 7 illustrates a more detailed schematic sectional side view of a door hinge 14 of the door opening system according to the first embodiment of the present invention, wherein the door 12 is in the partially opened state.

Due to the partially opened state of the door 12, the first rod 23 and the second rod 29 are pulled by the pivoting hinge part 20, so that the first spring element 22 is in a precompressed state. The precompressed state of the first spring element 22 keeps the door 12 balanced within the outer opening angular range of said door 12. In said outer opening angular range the opening angle of the door 12 is bigger that in the partially opened state.

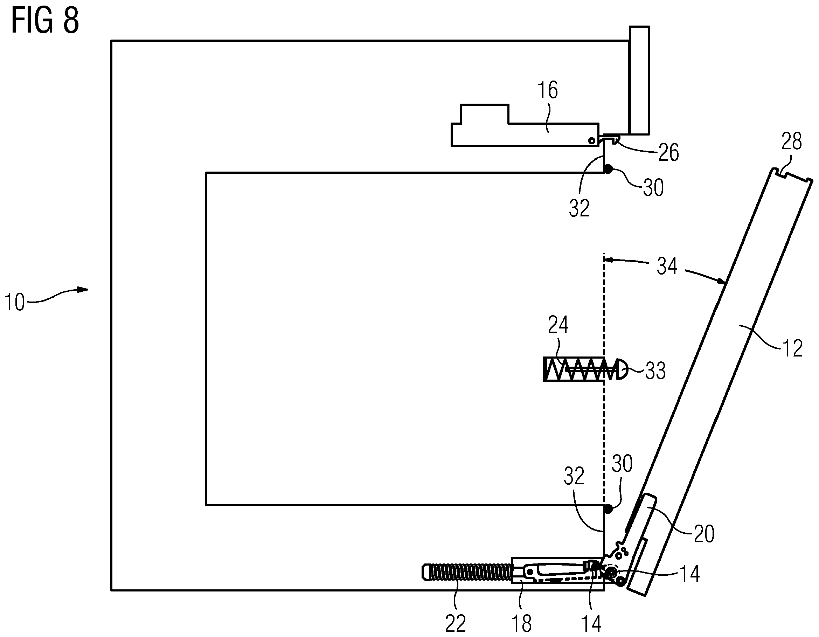

FIG 8 illustrates a schematic sectional side view of the domestic appliance including the door opening system according to a second embodiment not covered by the claims, wherein the door is in a partially opened state.

The door opening system according to the second embodiment differs from the first embodiment in that the door hinge 14 requires only one spring element, i.e. the first spring element 22. The second spring element 24 is formed as a separate part in the second embodiment. In FIG 8 the second spring element 24 is arranged at a flange or door frame enclosing the oven cavity. Alternatively, the second spring element 24 may be arranged at the door 12. The second spring element 24 pushes the door 12 into its partially opened state. In FIG 8 the second spring element 24 is in a decompressed state.

Further, a pestle 33 is arranged at that end of the second spring element 24, which may come into contact with the door 12 or the flange, respectively. Preferably, the pestle 33 is made of plastics.

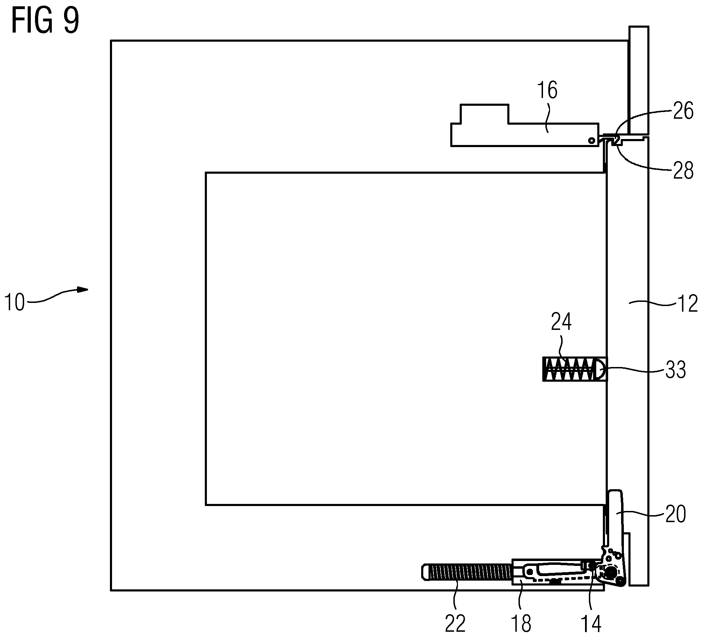

FIG 9 illustrates a schematic sectional side view of a domestic appliance including a door opening system according to the second embodiment not covered by the claims, wherein a door is in a closed state.

The hook element 26 is engaged with the recess 28, so that the door 12 is locked. In FIG 9 the second spring element 24 is in a precompressed state.

One application of the door opening system is a pyrolytic door lock system. Said pyrolytic door lock system guarantees that the door 12 is kept closed during the pyrolytic cleaning cycle. The door 12 can be closed manually by the user. Then, the hook element 26 engages with the recess 28 automatically by the force of the hook spring element 36. The time for locking the door 12 is less than 0.2 seconds.

Another application of the door opening system is a child lock system, which prevents the opening of the door 12, when a force acts onto the door 12 along the opening direction.

The door opening system according to the present invention allows the domestic appliance 10 may include a door 12 without any door handle. The door opening system allows a very fast opening of the door 12. The door 12 can be opened manually by lifting the hook element 26 by the user or automatically by operating a press button or touch sensor for actuating the hook element 26. The door hinge 14 or door hinges 14 may be realized by low complexity. The door 12 can be stopped at each angle within the outer opening angular range. Any additional damping elements are not required.

### List of reference numerals

- 10: domestic appliance
- 12: door
- 14: door hinge
- 16: hook mechanism
- 18: stationary hinge part
- 19: tab
- 20: pivoting hinge part, hinge arm
- 21: first pivoting axis
- 22: first spring element
- 23: first rod
- 24: second spring element
- 25: cam
- 26: hook element
- 27: second pivoting axis
- 28: recess
- 29: second rod
- 30: gasket
- 31: slidable stem
- 32: front frame
- 33: pestle
- 34: opening angle
- 36: hook spring element

## Claims

1. A domestic appliance (10) including at least one pivoting door (12) and at least one door opening system, wherein
- the door opening system comprises at least one door hinge (14),
- the door opening system comprises at least one hook mechanism (16),
- the hook mechanism (16) includes a hook element (26) engaged or engageable with a recess (28) in a closed state of said door (12), so that the hook element (26) and the recess (28) form a snap-in mechanism,
- the hook element (26) is disengaged or disengageable from the recess (28) by operating a control element,
- the door hinge (14) includes a stationary hinge part (18) and a pivoting hinge part (20),
- the stationary hinge part (18) is provided for a support structure of the domestic appliance (10), while the pivoting hinge part (20) is provided for the pivoting door (12),
- the stationary hinge part (18) is arranged or arrangea-ble horizontally inside or at the support structure of the domestic appliance (10),
- a spring element (24) is provided for generating an opening force for the door (12) within an inner opening angular range, so that the door (12) is pushed into a partially opened state,
- the inner opening angular range extends between a closed state and the partially opened state of the door (12), and
- the outer opening angular range extends between the partially opened state and a completely opened state of the door (12),
**characterized in that**
the hook element (26) is disengageable from the recess (28) by operating said hook element (26), and the stationary hinge part (18) comprises a first spring element (22) and a second spring element (24), wherein the first spring element (22) and the second spring element (24) are provided for generating horizontal forces in the mounted state of the door hinge (14) at the domestic appliance (10), and wherein the first spring element (22) is provided for keeping the door (12) balanced within an outer opening angular range of said door (12), while the second spring element (24) is provided for generating the opening force for the door (12) within the inner opening angular range.

2. The domestic appliance according to claim 1,
**characterized in that**
a roller is arranged at one end of the second spring element (24), which end may come into contact with the door (12) or a part being in rigid connection to said door (12).

3. The domestic appliance according to claim 1 or 2,
**characterized in that**
the door opening system comprises a pair of door hinges (14) having a common pivoting axis.

4. The domestic appliance according to any one of the preceding claims,
**characterized in that**
the hook mechanism (16) and the hook element (26) are arranged at a chassis of the domestic appliance (10), while the recess (28) is formed in the door (12).

5. The domestic appliance according to any one of the preceding claims,
**characterized in that**
the hook mechanism (16) includes a hook spring element (36) pushing the hook element (26) into that position, in which the recess (28) is arranged, if the door (12) is in the closed state.

6. The domestic appliance according to any one of the preceding claims,
**characterized in that**
in the partially opened state of the door (12) an opening angle (34) between the door (12) and a front frame (32) of the domestic appliance (10) is between 10° and 30°, preferably about 20°.

7. The domestic appliance according to any one of the preceding claims,
**characterized in that**
in the completely opened state of the door (12) the opening angle between the door (12) and the front frame (32) of the domestic appliance (10) is between 80° and 90°, preferably about 85°.

8. The domestic appliance according to any one of the preceding claims,
**characterized in that**
the door hinge (14) includes a friction element between a stationary hinge part (18) and a pivoting hinge part (20) of said door hinge (14), wherein said friction element effects a stop of the door (12) at a predetermined opening angle (34) .

9. The domestic appliance according to claim 13,
**characterized in that**
the friction element is made of plastics.

10. The domestic appliance according to any one of the preceding claims,
**characterized in that**
the first spring element (22) keeps the door (12) balanced against the force of gravity within the outer opening angular range of said door (12).

11. The domestic appliance according to any one of the preceding claims,
**characterized in that**
the first spring element (22) keeps the door (12) balanced against the force of the second spring element (22) within the outer opening angular range of said door (12).

12. The domestic appliance according to any one of the preceding claims,
**characterized in that**
the door (12) is kept closed by the hook element (26) engaged with the recess (28).

13. The domestic appliance according to any one of the preceding claims,
**characterized in that**
the door (12) is kept closed only by the hook element (26) engaged with the recess (28) and without any force of the first spring element (22) and second spring element (24).

14. The domestic appliance according to any one of the preceding claims,
**characterized in that**
the door (12) is pivoting around a horizontal or vertical axis.

## Patentansprüche

1. Haushaltsgerät (10), umfassend wenigstens eine schwenkbare Tür (12) und wenigstens ein Türöffnungssystem, wobei
- das Türöffnungssystem wenigstens ein Türscharnier (14) umfasst,
- das Türöffnungssystem wenigstens einen Hakenmechanismus (16) umfasst,
- der Hakenmechanismus (16) ein Hakenelement (26) umfasst, das in einem geschlossenen Zustand der Tür (12) mit einer Ausnehmung (28) in Eingriff steht oder in Eingriff gebracht werden kann, so dass das Hakenelement (26) und die Ausnehmung (28) einen Schnappmechanismus bilden,
- das Hakenelement (26) durch Bedienen eines Steuerelements außer Eingriff mit der Ausnehmung (28) steht oder außer Eingriff mit derselben gebracht werden kann,
- das Türscharnier (14) einen feststehenden Scharnierteil (18) und einen schwenkbaren Scharnierteil (20) umfasst,
- der feststehende Scharnierteil (18) für eine Tragstruktur des Haushaltsgeräts (10) vorgesehen ist, während der schwenkbare Scharnierteil (20) für die schwenkbare Tür (12) vorgesehen ist,
- der feststehende Scharnierteil (18) horizontal in oder an der Tragstruktur des Haushaltsgeräts (10) angeordnet ist oder angeordnet werden kann,
- ein Federelement (24) dazu vorgesehen ist, eine Öffnungskraft für die Tür (12) in einem inneren Öffnungswinkelbereich zu erzeugen, so dass die Tür (12) in einen teilweise geöffneten Zustand gedrückt wird,
- sich der innere Öffnungswinkelbereich zwischen einem geschlossenen Zustand und dem teilweise geöffneten Zustand der Tür (12) erstreckt und
- sich der äußere Öffnungswinkelbereich zwischen dem teilweise geöffneten Zustand und einem vollständig geöffneten Zustand der Tür (12) erstreckt,
**dadurch gekennzeichnet, dass**
das Hakenelement (26) durch Bedienen des Hakenelements (26) mit der Ausnehmung (28) außer Eingriff gebracht werden kann und der feststehende Scharnierteil (18) ein erstes Federelement (22) und ein zweites Federelement (24) umfasst, wobei das erste Federelement (22) und das zweite Federelement (24) dazu vorgesehen sind, horizontale Kräfte in dem befestigten Zustand des Türscharniers (14) an dem Haushaltsgerät (10) zu erzeugen, und wobei das erste Federelement (22) dazu vorgesehen ist, die Tür (12) in einem äußeren Öffnungswinkelbereich der Tür (12) ausbalanciert zu halten, während das zweite Federelement (24) dazu vorgesehen ist, die Öffnungskraft für die Tür (12) in dem inneren Öffnungswinkelbereich zu erzeugen.

2. Haushaltsgerät nach Anspruch 1,
**dadurch gekennzeichnet, dass**
eine Rolle an einem Ende des zweiten Federelements (24) angeordnet ist, wobei das Ende in Kontakt mit der Tür (12) oder einem in starrer Verbindung mit der Tür (12) stehenden Teil kommen kann.

3. Haushaltsgerät nach Anspruch 1 oder 2,
**dadurch gekennzeichnet, dass**
das Türöffnungssystem ein Paar von Türscharnieren (14) umfasst, die eine gemeinsame Schwenkachse aufweisen.

4. Haushaltsgerät nach einem der vorhergehenden Ansprüche,
**dadurch gekennzeichnet, dass**
der Hakenmechanismus (16) und das Hakenelement (26) an einem Gehäuse des Haushaltsgeräts (10) angeordnet sind, während die Ausnehmung (28) in der Tür (12) ausgebildet ist.

5. Haushaltsgerät nach einem der vorhergehenden Ansprüche,
**dadurch gekennzeichnet, dass**
der Hakenmechanismus (16) ein Hakenfederelement (36) umfasst, das das Hakenelement (26) in die Position drückt, in der die Ausnehmung (28) angeordnet ist, wenn sich die Tür (12) in dem geschlossenen Zustand befindet.

6. Haushaltsgerät nach einem der vorhergehenden Ansprüche,
**dadurch gekennzeichnet, dass**
in dem teilweise geöffneten Zustand der Tür (12) ein Öffnungswinkel (34) zwischen der Tür (12) und einem vorderen Rahmen (32) des Haushaltsgeräts (10) zwischen 10° und 30°, vorzugsweise bei ungefähr 20°, liegt.

7. Haushaltsgerät nach einem der vorhergehenden Ansprüche,
**dadurch gekennzeichnet, dass**
in dem vollständig geöffneten Zustand der Tür (12) der Öffnungswinkel zwischen der Tür (12) und dem vorderen Rahmen (32) des Haushaltsgeräts (10) zwischen 80° und 90°, vorzugsweise bei ungefähr 85°, liegt.

8. Haushaltsgerät nach einem der vorhergehenden Ansprüche,
**dadurch gekennzeichnet, dass**
das Türscharnier (14) ein Reibelement zwischen einem feststehenden Scharnierteil (18) und einem schwenkbaren Scharnierteil (20) des Türscharniers (14) umfasst, wobei das Reibelement bei einem vorgegebenen Öffnungswinkel (34) einen Stopp der Tür (12) bewirkt.

9. Haushaltsgerät nach Anspruch 13,
**dadurch gekennzeichnet, dass**
das Reibelement aus Kunststoff hergestellt ist.

10. Haushaltsgerät nach einem der vorhergehenden Ansprüche,
**dadurch gekennzeichnet, dass**
das erste Federelement (22) die Tür (12) gegen die Schwerkraft in dem äußeren Öffnungswinkelbereich der Tür (12) ausbalanciert hält.

11. Haushaltsgerät nach einem der vorhergehenden Ansprüche,
gekennzeichnet, dass
das erste Federelement (22) die Tür (12) gegen die Kraft des zweiten Federelements (22) in dem äußeren Öffnungswinkelbereich der Tür (12) ausbalanciert hält.

12. Haushaltsgerät nach einem der vorhergehenden Ansprüche,
**dadurch gekennzeichnet, dass**
die Tür (12) durch das mit der Ausnehmung (28) in Eingriff stehende Hakenelement (26) geschlossen gehalten wird.

13. Haushaltsgerät nach einem der vorhergehenden Ansprüche,
**dadurch gekennzeichnet, dass**
die Tür (12) nur durch das mit der Ausnehmung (28) in Eingriff stehende Hakenelement (26) und ohne eine Kraft des ersten Federelements (22) und des zweiten Federelements (24) geschlossen gehalten wird.

14. Haushaltsgerät nach einem der vorhergehenden Ansprüche,
**dadurch gekennzeichnet, dass**
die Tür (12) um eine horizontale oder vertikale Achse schwenkbar ist.

## Revendications

1. Appareil électroménager (10) comportant au moins une porte pivotante (12) et au moins un système d'ouverture de porte, dans lequel
- le système d'ouverture de porte comprend au moins une charnière de porte (14),
- le système d'ouverture de porte comprend au moins un mécanisme à crochet (16),
- le mécanisme à crochet (16) comporte un élément de crochet (26) en prise ou pouvant être mis en prise avec un renfoncement (28) dans un état fermé de ladite porte (12), de telle sorte que l'élément de crochet (26) et le renfoncement (28) forment un mécanisme d'encliquetage,
- l'élément de crochet (26) est désengagé ou peut être désengagé du renfoncement (28) par l'actionnement d'un élément de commande,
- la charnière de porte (14) comporte une partie de charnière stationnaire (18) et une partie de charnière pivotante (20),
- la partie de charnière stationnaire (18) est prévue pour une structure de support de l'appareil électroménager (10), tandis que la partie de charnière pivotante (20) est prévue pour la porte pivotante (12),
- la partie de charnière stationnaire (18) est disposée ou peut être disposée horizontalement à l'intérieur ou au niveau de la structure de support de l'appareil électroménager (10),
- un élément de ressort (24) est prévu pour générer une force d'ouverture pour la porte (12) dans une plage angulaire d'ouverture intérieure, de telle sorte que la porte (12) soit poussée dans un état partiellement ouvert,
- la plage angulaire d'ouverture intérieure s'étend entre un état fermé et l'état partiellement ouvert de la porte (12), et
- la plage angulaire d'ouverture extérieure s'étend entre l'état partiellement ouvert et un état complètement ouvert de la porte (12),
**caractérisé en ce que**
l'élément de crochet (26) peut être désengagé du renfoncement (28) en actionnant ledit élément de crochet (26), et la partie de charnière stationnaire (18) comprend un premier élément de ressort (22) et un deuxième élément de ressort (24), le premier élément de ressort (22) et le deuxième élément de ressort (24) étant prévus pour générer des forces horizontales dans l'état monté de la charnière de porte (14) au niveau de l'appareil électroménager (10), et le premier élément de ressort (22) étant prévu pour maintenir la porte (12) en équilibre à l'intérieur d'une plage angulaire d'ouverture extérieure de ladite porte (12), tandis que le deuxième élément de ressort (24) est prévu pour générer la force d'ouverture pour la porte (12) à l'intérieur de la plage angulaire d'ouverture intérieure.

2. Appareil électroménager selon la revendication 1,
**caractérisé en ce**
**qu'**un rouleau est disposé à une extrémité du deuxième élément de ressort (24), ladite extrémité pouvant venir en contact avec la porte (12) ou une partie étant connectée rigidement avec ladite porte (12).

3. Appareil électroménager selon la revendication 1 ou 2,
**caractérisé en ce que**
le système d'ouverture de porte comprend une paire de charnières de porte (14) ayant un axe de pivotement commun.

4. Appareil électroménager selon l'une quelconque des revendications précédentes,
**caractérisé en ce que**
le mécanisme à crochet (16) et l'élément de crochet (26) sont disposés au niveau d'un châssis de l'appareil électroménager (10), tandis que le renfoncement (28) est formé dans la porte (12).

5. Appareil électroménager selon l'une quelconque des revendications précédentes,
**caractérisé en ce que**
le mécanisme à crochet (16) comprend un élément de ressort de crochet (36) poussant l'élément de crochet (26) dans la position dans laquelle le renfoncement (28) est disposé si la porte (12) est dans l'état fermé.

6. Appareil électroménager selon l'une quelconque des revendications précédentes,
**caractérisé en ce que**
dans l'état partiellement ouvert de la porte (12), un angle d'ouverture (34) entre la porte (12) et un cadre avant (32) de l'appareil électroménager (10) est compris entre 10° et 30°, de préférence vaut environ 20°.

7. Appareil électroménager selon l'une quelconque des revendications précédentes,
**caractérisé en ce que**
dans l'état complètement ouvert de la porte (12), l'angle d'ouverture entre la porte (12) et le cadre avant (32) de l'appareil électroménager (10) est compris entre 80° et 90°, de préférence vaut environ 85°.

8. Appareil électroménager selon l'une quelconque des revendications précédentes,
**caractérisé en ce que**
la charnière de porte (14) comporte un élément de friction entre une partie de charnière stationnaire (18) et une partie de charnière pivotante (20) de ladite charnière de porte (14),
ledit élément de friction constituant une butée de la porte (12) à un angle d'ouverture prédéterminé (34) .

9. Appareil électroménager selon la revendication 13,
**caractérisé en ce que**
l'élément de friction est fabriqué en plastique.

10. Appareil électroménager selon l'une quelconque des revendications précédentes,
**caractérisé en ce que**
le premier élément de ressort (22) maintient la porte (12) en équilibre à l'encontre de la force de gravité à l'intérieur de la plage angulaire d'ouverture extérieure de ladite porte (12).

11. Appareil électroménager selon l'une quelconque des revendications précédentes,
**caractérisé en ce que**
le premier élément de ressort (22) maintient la porte (12) en équilibre à l'encontre de la force du deuxième élément de ressort (22) à l'intérieur de la plage angulaire d'ouverture extérieure de ladite porte (12).

12. Appareil électroménager selon l'une quelconque des revendications précédentes,
**caractérisé en ce que**
la porte (12) est maintenue fermée par l'élément de crochet (26) en prise avec le renfoncement (28) .

13. Appareil électroménager selon l'une quelconque des revendications précédentes,
**caractérisé en ce que**
la porte (12) est maintenue fermée uniquement par l'élément de crochet (26) en prise avec le renfoncement (28) et sans aucune force du premier élément de ressort (22) et du deuxième élément de ressort (24).

14. Appareil électroménager selon l'une quelconque des revendications précédentes,
**caractérisé en ce que**
la porte (12) pivote autour d'un axe horizontal ou vertical.
